# EUROPEAN PATENT APPLICATION

(11) **EP 4 601 221 A1**
(43) Date of publication of application: **13.08.2025**
(21) Application number: 22961367.4
(22) Date of filing: 04.10.2022
(51) Int. Cl.: H04B 10/27

(54) **OPTICAL COMMUNICATION METHOD AND OPTICAL COMMUNICATION DEVICE**

(71) Applicant: NIPPON TELEGRAPH AND TELEPHONE CORPORATION, Chiyoda-ku, Tokyo 100-8116 (JP)
(72) Inventor: O Hiroshi, Musashino-shi, Tokyo 180-8585 (JP); SUZUKI Takahiro, Musashino-shi, Tokyo 180-8585 (JP); SHIMADA Tatsuya, Musashino-shi, Tokyo 180-8585 (JP); KANI Junichi, Musashino-shi, Tokyo 180-8585 (JP); SHIBATA Naotaka, Musashino-shi, Tokyo 180-8585 (JP); KANEKO Shin, Musashino-shi, Tokyo 180-8585 (JP); YOSHIDA Tomoaki, Musashino-shi, Tokyo 180-8585 (JP)
(74) Representative: Brevalex
(86) International application number: PCT/JP2022/037131
(87) International publication number: WO 2024/075177

(57) **Abstract**

An aspect of the present invention includes: an authentication step of authenticating an optical terminal; a scheme setting step of setting a communication scheme to be used between the terminal and a connection destination terminal to which the terminal is connected; a wavelength setting step of setting a wavelength to be used between the terminal and the connection destination terminal; and a path setting step of setting an optical path to be used between the terminal and the connection destination terminal.

## Description

### Technical Field

The present invention relates to an optical communication method and a technique of an optical communication apparatus.

### Background Art

In a communication system, in order to avoid an attack from a malicious user, it is required to perform authentication on a device to be connected at the time of provisioning. There is an SDN-enabled broadband access (SEBA) as one of communication systems in which a provisioning sequence including authentication is specified.

### Citation List

### Non Patent Literature

Non Patent Literature 1: Takahiro Suzuki, "Zero touch provisioning compliant with authentications of IEEE PON packages A and B for SDN-enabled broadband access", Vol. 13, No. 11/November 2021/Journal of Optical Communications and Networking.
Non Patent Literature 2: Photonic Gateway and Related Optical Access Technologies to Achieve the All-Photonics Network, NTT Technical Review 2021.2 https://www.rd.ntt/research/JN202102_10379.html

### Summary of Invention

### Technical Problem

Since SEBA is a provisioning sequence for PON (Passive Optical Network), there is a problem that SEBA cannot be directly applied to APN (All Photonics Network: see Non-Patent Literature 2) that sets an optical path at End-to-End. Specifically, the SEBA only determines conduction/non-conduction of the main signal on the basis of the authentication result, and cannot perform wavelength allocation or optical path provisioning to a newly connected terminal.

In view of the above circumstances, an object of the present invention is to provide a technique for authenticating a newly connected terminal and enabling wavelength allocation to the terminal and provisioning of an optical path.

### Solution to Problem

One aspect of the present invention is an optical communication method of an optical communication apparatus, the optical communication method including: an authentication step of authenticating a terminal; a scheme setting step of setting a communication scheme to be used between the terminal and a connection destination terminal to which the terminal is connected; a wavelength setting step of setting a wavelength to be used between the terminal and the connection destination terminal; and a path setting step of setting an optical path to be used between the terminal and the connection destination terminal.

One aspect of the present invention is an optical communication apparatus including: an authenticator that authenticates a terminal; a scheme setter that sets a communication scheme to be used between the terminal and a connection destination terminal to which the terminal is connected; a wavelength setter that sets a wavelength to be used between the terminal and the connection destination terminal; and a path setter that sets an optical path to be used between the terminal and the connection destination terminal.

### Advantageous Effects of Invention

According to the present invention, it is possible to provide a technique that authenticates a newly connected terminal and enables wavelength allocation to the terminal and provisioning of an optical path.

### Brief Description of Drawings

[Fig. 1] Fig. 1 is a block diagram illustrating a configuration of an optical communication system.
[Fig. 2] Fig. 2 is a diagram illustrating a modification of a network device.
[Fig. 3] Fig. 3 is a state transition diagram of each terminal managed by a network controller.
[Fig. 4] Fig. 4 is a provisioning sequence diagram illustrating a flow of processing of the optical communication system.
[Fig. 5] Fig. 5 is a flowchart illustrating a flow of processing of an optical communication apparatus.
[Fig. 6] Fig. 6 is a diagram illustrating timing of measurement in a provisioning sequence.

### Description of Embodiments

Embodiments of the present invention will be described in detail with reference to the drawings.

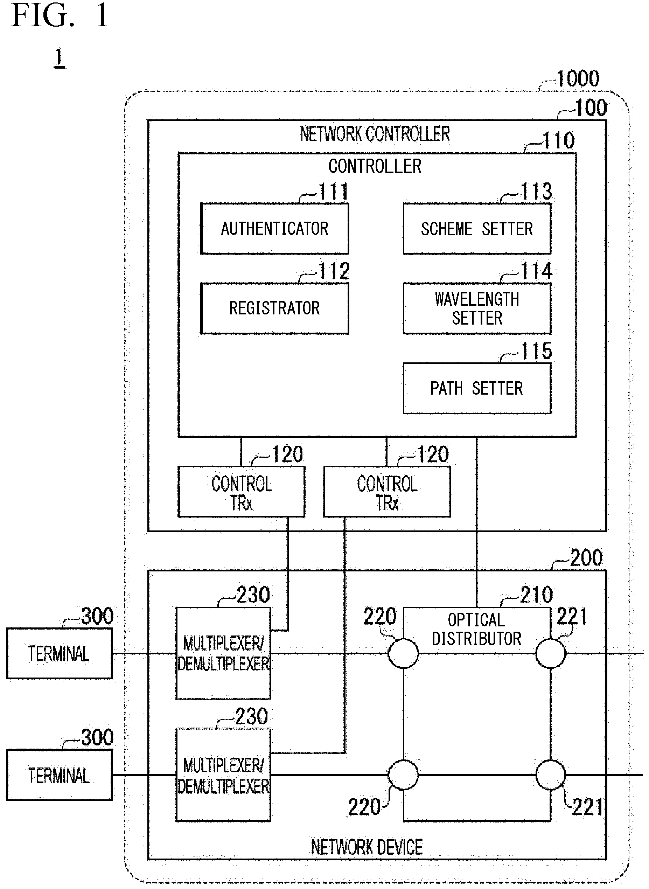

Fig. 1 is a block diagram illustrating a configuration of an optical communication system 1 according to an embodiment. The optical communication system 1 includes an optical communication apparatus 1000 and a plurality of (two in the drawing) terminals 300. The terminal 300 is a terminal used by a user, is connected to the optical communication apparatus 1000, and performs optical communication with a terminal of a connection destination (hereinafter, also referred to as "connection destination terminal"). In the example of Fig. 1, in order to simplify the description, an optical communication apparatus that can be connected to up to two terminals 300 is used as an example, but the present invention is not limited thereto.

The optical communication apparatus 1000 includes a network controller 100 and a network device 200. The network controller 100 controls the network device 200. The network controller 100 and the network device 200 may be provided in the same housing. The network device 200 is connected to the terminal 300, and provisions an optical path between the terminal 300 and the connection destination terminal under the control of the network controller 100. The provisioning of the optical path is performed by a request from the terminal 300 or an instruction from a host device. The host device is, for example, an operation system for an operator to manage and control a network controller.

Specifically, the network device 200 includes a plurality of (two in the drawing) multiplexers/demultiplexers 230 and an optical distributor 210. The multiplexer/demultiplexer 230 is an optical device that multiplexes and demultiplexes an optical signal, and is, for example, a wavelength filter, but an optical coupler may be used. The multiplexer/demultiplexer 230 connects the terminal 300 to the optical distributor 210 or a control TRx120 to be described later.

The optical distributor 210 includes ports 220 and 221, and distributes the main signal of the terminal 300 input from the port 220 to the port 221 corresponding to the connection destination terminal. Conversely, the optical distributor 210 distributes the main signal of the connection destination terminal input from the port 221 to the port 220 corresponding to the terminal 300. The optical distributor 210 is, for example, an optical switch, but may be a device constituting a reconfigurable optical add-drop multiplexer (ROADM).

The network controller 100 includes a controller 110 and a plurality of (two in the drawing) control TRx120s. The control TRx120 is connected to the terminal 300 and the controller 110. The control TRx120 transmits and receives a control signal. The control TRx120 is, for example, an auxiliary management and control channel (AMCC) compatible transceiver. In this case, the control TRx120 transmits and receives the control signal by superimposing the control signal on the main signal using the AMCC. Note that, the control TRx120 may use a control optical transceiver using a signal different from the main signal.

The controller 110 is connected to the optical distributor 210 and the control TRx120. The controller 110 includes an authenticator 111, a registrator 112, a scheme setter 113, a wavelength setter 114, and a path setter 115. The authenticator 111 authenticates the terminal 300. The registrator 112 registers device information of the terminal 300. The device information is, for example, a communication scheme (capabilities such as a baud rate, a modulation scheme, and an error correction scheme) that can be used by the terminal 300. Further, the device information is port information of the optical distributor 210 connected to the terminal 300. As a method of acquiring the port information of the optical distributor 210, for example, there is a method based on the control TRx120 connected to the terminal 300 by holding a relationship table between the control TRx120 and the port information of the optical distributor 210 in advance, but the method is not limited thereto.

The scheme setter 113 sets a communication scheme to be used between the terminal 300 and a connection destination terminal to which the terminal 300 is connected. The wavelength setter 114 sets a wavelength to be used between the terminal 300 and the connection destination terminal. The path setter 115 sets an optical path to be used between the terminal 300 and the connection destination terminal.

In addition to the above-described settings, the controller 110 performs control (setting of optical power, error correction scheme, transmission/reception rate, etc.) on the terminal 300 and control (provisioning of a main signal and a connection destination change) on the optical distributor 200.

Note that the order of the setting of the communication scheme, the setting of the wavelength, and the setting of the optical path is random. Furthermore, in a case where the wavelength or the communication scheme cannot be set for the terminal 300, the setting for the terminal 300 may be skipped. As a case where the wavelength or the communication scheme cannot be set, for example, a single wavelength is supported or a single communication scheme is supported in some cases.

In a case where at least one of the wavelength and the communication scheme is not aligned between the terminal 300 and the connection destination terminal, or in a case where there is no optical path that can be set (for example, in a case where there is no settable wavelength/communication scheme), the network device 200 is kept closed, and the provisioning of the optical path is canceled. Note that wavelength conversion may be performed in the optical path between the terminal 300 and the connection destination terminal. In this case, if there is a wavelength that can be set in consideration of wavelength conversion, the wavelengths are assumed to be aligned. The controller 110 may notify the host device that the provisioning of the optical path is canceled due to setting mismatch.

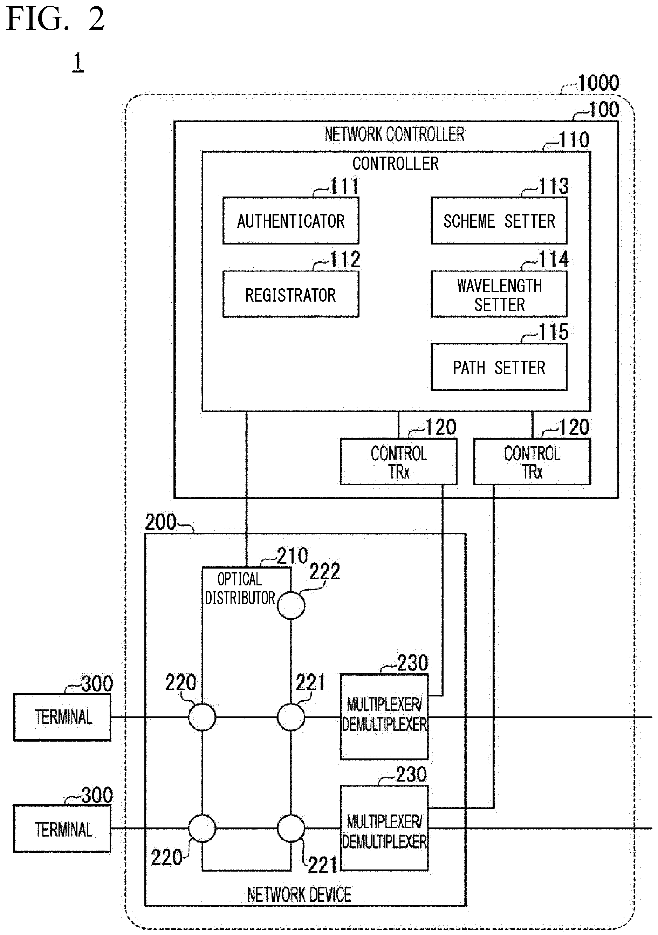

Fig. 2 is a diagram illustrating a modification of the network device 200. The difference from the configuration illustrated in Fig. 1 is that the multiplexer/demultiplexer 230 is provided at the subsequent stage of the optical distributor 210 and that an initial connection port 222 is provided. In a case where the multiplexer/demultiplexer 230 is provided at a subsequent stage of the optical distributor 210, when the terminal 300 starts connection so that the main signal of the terminal 300 before authentication does not reach a higher-order network, the terminal 300 is first connected to the initial connection port 222. The terminal 300 is connected to the initial connection port 222, and is connected to the port 221 after authentication or the like is performed. A method of acquiring the port information of the optical distributor 210 in the case of the modification illustrated in Fig. 2 is, for example, a method based on fluctuation of received light power measured in the port 220 of the optical distributor 210, but is not limited thereto. In the present embodiment, the present invention is also applicable to the configuration illustrated in Fig. 2.

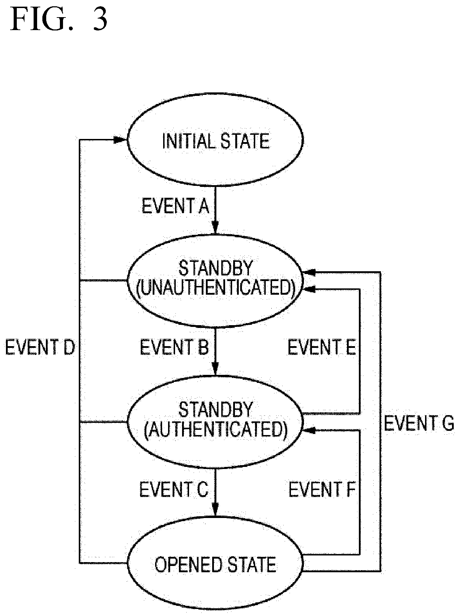

Fig. 3 is a state transition diagram of each terminal 300 managed by the network controller 100. The state of the terminal 300 includes an initial state, standby (unauthenticated), standby (authenticated), and a provisioned state. The initial state is a state in which the network controller 100 has not detected connection of the terminal 300. The state in which the connection of the terminal 300 is not detected is a state in which the terminal 300 is not connected or a state in which the terminal 300 is connected but is not detected.

The standby (unauthenticated) is a state in which authentication for the terminal 300 is not completed. In this standby (unauthenticated), the controller 110 cannot perform path setting. The standby (authenticated) is a state in which the terminal 300 is authenticated by the authenticator 111, and the registration of the terminal 300 is completed by the registrator 112, but communication is not performed. In other words, it is a state of waiting for an instruction or request for path provisioning, or a state in which communication cannot be performed although the path has been set due to terminal sleep or the like. The provisioned state is a state in which communication is possible between the terminal 300 and the connection destination terminal.

Each state transitions in accordance with an event. The events include events A, B, C, D, E, F, and G. The event A is an event for transitioning from the initial state to the standby (unauthenticated). The event A includes completion of connection detection of the terminal 300. The event B is an event for transitioning from the standby (unauthenticated) to the standby (authenticated). The event B includes completion of authentication of the terminal 300 and registration of the terminal 300. The event C is an event for transitioning from the standby (authenticated) to the provisioned state. The event C includes completion of provisioning of the optical path, returning of the terminal 300 from the sleep state to the normal state, an instruction from the host device, reconnection by the connection destination terminal, or re-authentication. Note that the instruction from the host device is performed, for example, when a failure of the APN is recovered.

The event D is an event for transitioning from the provisioned state, the standby (unauthenticated), and the standby (authenticated) to the initial state. The event D includes a failure or replacement of the terminal 300 or deletion of information of the terminal 300 registered by the registrator 112.

The event E is an event for transitioning from the standby (authenticated) to the standby (unauthenticated). The event E includes deletion of authentication information. For example, when the expiration date of the authentication information of the terminal 300 arrives (authentication expires) and the authentication information becomes invalid, the authentication information is deleted.

The event F is an event for transitioning from the provisioned state to the standby (authenticated). The event F includes a transition of the terminal 300 from the normal state to the sleep state, an instruction from a host device, disconnection or authentication expiration of the connection destination terminal, or release of the optical path. Note that the instruction from the host device is performed, for example, when the optical fiber constituting the APN is disconnected or the APN fails.

The event G is an event for transitioning from the provisioned state to the standby (unauthenticated). The event G includes deletion of authentication information or absence of communication between the terminal 300 and the connection destination terminal for a certain period of time.

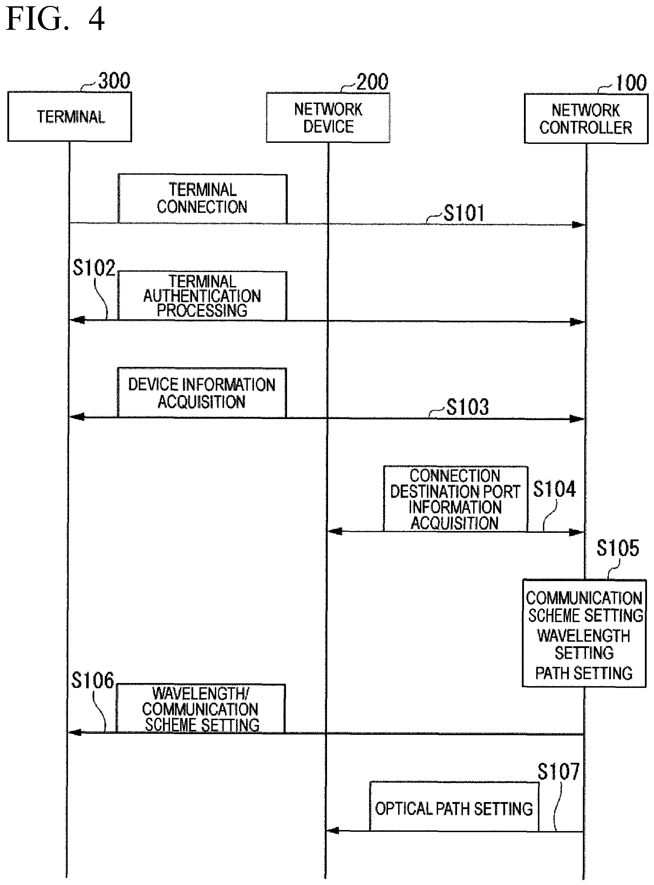

Fig. 4 is a provisioning sequence diagram illustrating a flow of processing of the optical communication system 1. The terminal 300 is connected to the network controller 100 via the network device 200 (step S101). Authentication processing of the terminal 300 is performed between the terminal 300 and the authenticator 111 of the network controller 100 (step S102). Here, it is assumed that the authentication is successful.

Next, between the terminal 300 and the registrator 112 of the network controller 100, device information of the terminal 300 is acquired (step S103), and port information of the optical distributor 210 is acquired (step S104). The network controller 100 sets a communication scheme, a wavelength, and a path (step S105). As a result, the wavelength and the communication scheme are set in the terminal 300 (step S106), and the optical path is set for the optical distributor 210 of the network device 200 (step S107).

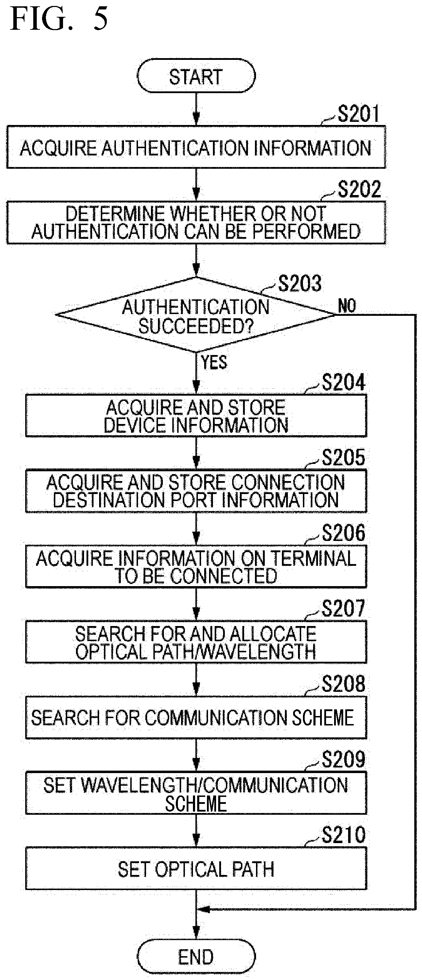

Fig. 5 is a flowchart illustrating a flow of processing of the optical communication apparatus 1000. This flowchart illustrates a flow of processing until the optical path of the terminal 300 is provisioned. The trigger of this processing is that the terminal 300 is connected to the optical communication apparatus 1000, but detection of this connection by the network device 200 or the network controller 100 may be used as the trigger. In addition, the network device 200 or the network controller 100 may actively search for a newly connectable terminal, and the search may be used as the trigger. As an active search method, for example, a method such as Discovery of passive optical network (PON) may be used.

First, in the provisioning sequence, the connected terminal is first authenticated. The network controller 100 acquires the authentication information from the terminal 300 (step S201). The authentication information is, for example, identification (ID)/pass word (PW) or media access control (MAC) address information given to the terminal 300, or information encrypted on the basis of these pieces of information.

Next, the network controller 100 determines whether or not authentication can be performed based on the acquired authentication information (step S203). Specifically, it is confirmed whether the acquired ID/PW or MAC address information is registered in a database in the network as an authentication permission target. As an authentication method, for example, RADIUS (Remote Authentication Dial In User Service) authentication using a RADIUS server may be used, but the authentication method is not limited thereto. Note that user authentication may be used in addition to the authentication of the terminal 300 described above. In this case, in the user authentication, authentication information (for example, user ID/PW) independent of the terminal is used.

The network controller 100 determines whether or not the authentication has succeeded as a result of determining whether or not the authentication has succeeded (step S203). In a case where the authentication has failed (step S203), the network controller 100 ends the processing. That is, the network controller 100 remains closed without being provisioned.

When the authentication has succeeded (step S203: YES), the processing related to the authentication of the terminal 300 ends, and the processing proceeds to the processing related to the registration of the device information. The network controller 100 acquires and stores the device information from the terminal 300 (step S204). The network controller 100 acquires and stores the port information of the optical distributor 210 connected to the terminal 300 (step S205). As a result, the processing related to the registration of the device information ends. Note that steps S204 and S205 are in no particular order.

When the registration of the device information is completed, processing related to provisioning of the optical path is performed. Note that it is not necessary to immediately provision the optical path after the registration of the device information is completed, and it is not necessary to provision the optical path unless there is an instruction from the host device or a request from the terminal 300.

The network controller 100 acquires terminal information of a connection destination based on an instruction from the host device or a request from the terminal 300 (step S206). The network controller 100 searches for an optical path/wavelength to be used between the terminal 300 and the connection destination terminal and allocates the optical path/wavelength for the connection (step S207). The network controller 100 searches for a communication scheme used for connection between the terminal 300 and the connection destination terminal (step S208). Thereafter, the wavelength and the communication scheme are set for the terminal 300 (step S209), and an optical path for a main signal is set for the optical distributor 210 (step S210).

The search order of the communication scheme, the wavelength, and the optical path illustrated in the above flowchart is in no particular order. In addition, the setting order of the communication scheme, the wavelength, and the optical path after the search is also in no particular order.

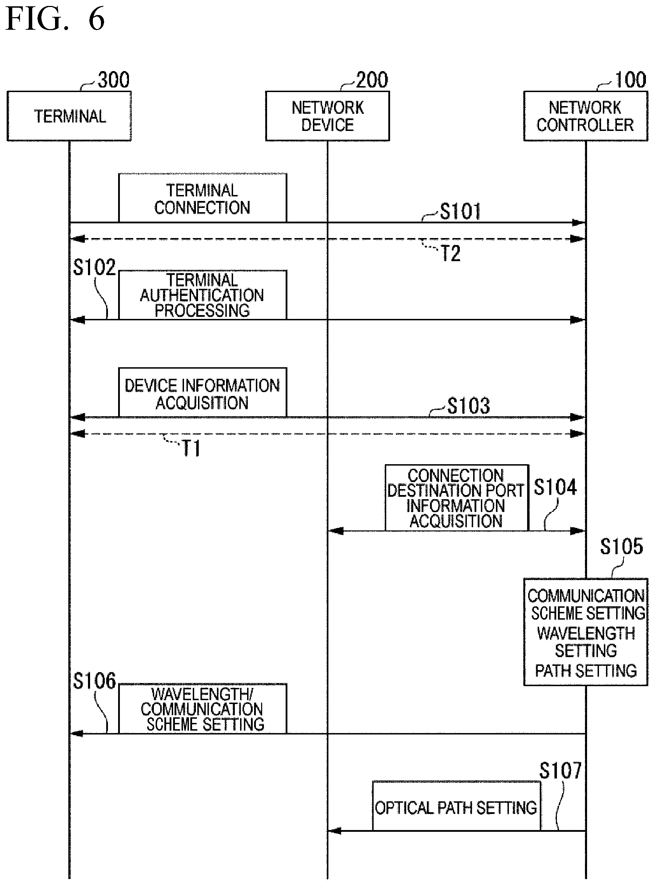

Next, a communication delay will be described. In the provisioning processing between the terminal 300 and the connection destination terminal, it is conceivable to measure a delay time (propagation distance) in communication between the terminal 300 and the network controller 100. Hereinafter, a method of measuring a delay between the terminal 300 and the network controller 100 will be described with reference to Fig. 6. Fig. 6 is a diagram illustrating timing of measurement in a provisioning sequence.

Since there are two measurement timings (T1, T2), each will be described. Note that, in Fig. 6, T1 and T2 are described separately from steps S103 and 101, respectively, for the sake of clarity, and T1 and T2 are the same timing as S103 and 101, respectively.

First, for T1, the network controller 100 transmits and receives a probe signal from the network controller 100 to the terminal 300 as part of acquisition of device information. Then, the network controller 100 measures a round trip time (RTT) required from transmission to reception of the probe signal, and sets the measured time as a delay time.

Next, for T2, the network controller 100 may measure the delay time when the terminal 300 is connected. For example, when detecting the connection of the terminal 300 using Discovery of PON, the network controller 100 may use the time measured by the accompanying Ranging processing as the delay time. When the network device 200 detects the connection of the terminal 300, the network device 200 may measure the delay time.

In the embodiment described above, when the terminal 300 is connected, authentication is performed, the wavelength is set, the communication scheme is also set, and the optical path is provisioned. Therefore, it is possible to authenticate the newly connected user, and to perform the wavelength allocation to the newly connected user and the provisioning of the optical path.

The authenticator 111, the registrator 112, the scheme setter 113, the wavelength setter 114, and the path setter 115 may be configured using a processor such as a central processing unit (CPU) and a memory. In this case, the authenticator 111, the registrator 112, the scheme setter 113, the wavelength setter 114, and the path setter 115 function as the authenticator 111, the registrator 112, the scheme setter 113, the wavelength setter 114, and the path setter 115 by the processor executing a program. All or some of the functions of the authenticator 111, the registrator 112, the scheme setter 113, the wavelength setter 114, and the path setter 115 may be implemented by using hardware such as an application specific integrated circuit (ASIC), a programmable logic device (PLD), or a field programmable gate array (FPGA). The above program may be recorded in a computer-readable recording medium. The computer-readable recording medium is, for example, a portable medium such as a flexible disk, a magneto-optical disc, a ROM, a CD-ROM, or a semiconductor storage device (e.g., a solid state drive (SSD)) or a storage device such as a hard disk or a semiconductor storage device built in a computer system. The program may be transmitted via a telecommunication line.

Although the embodiment of the present invention has been described in detail with reference to the drawings, specific configurations are not limited to the embodiment, and include design and the like within a range not departing from the gist of the present invention.

### Industrial Applicability

The present invention is applicable to a system that performs wavelength assignment to a terminal and provisioning of an optical path.

### Reference Signs List

- 1: optical communication system
- 100: network controller
- 110: controller
- 111: authenticator
- 112: registrator
- 113: scheme setter
- 114: wavelength setter
- 115: path setter
- 200: network device
- 210: optical distributor
- 220, 221: port
- 222: initial connection port
- 230: multiplexer/demultiplexer
- 300: terminal
- 1000: optical communication apparatus

## Claims

1. An optical communication method of an optical communication apparatus, the optical communication method comprising:
an authentication step of authenticating a terminal;
a scheme setting step of setting a communication scheme to be used between the terminal and a connection destination terminal to which the terminal is connected;
a wavelength setting step of setting a wavelength to be used between the terminal and the connection destination terminal; and
a path setting step of setting an optical path to be used between the terminal and the connection destination terminal.

2. The optical communication method according to claim 1, the optical communication method comprising:
a communication scheme acquisition step of acquiring a communication scheme usable by the terminal,
wherein in the scheme setting step, a communication scheme is set based on the communication scheme acquired in the communication scheme acquisition step.

3. The optical communication method according to claim 2,
wherein in the communication scheme acquisition step, a delay time in communication between the optical communication apparatus and the terminal is measured.

4. The optical communication method according to claim 1,
wherein a step of detecting connection of the terminal includes a step of measuring a delay time in communication between the optical communication apparatus and the terminal.

5. The optical communication method according to any one of claims 1 to 4,
wherein in the authentication step, a user of the terminal is further authenticated.

6. An optical communication apparatus comprising:
an authenticator that authenticates a terminal;
a scheme setter that sets a communication scheme to be used between the terminal and a connection destination terminal to which the terminal is connected;
a wavelength setter that sets a wavelength to be used between the terminal and the connection destination terminal; and
a path setter that sets an optical path to be used between the terminal and the connection destination terminal.
